Europäisches Patentamt

**European Patent Office**

**Office européen des brevets**

(19)

(11) Numéro de publication: **0 110 798**
A2

## (12) DEMANDE DE BREVET EUROPEEN

(21) Numéro de dépôt: **83420182.4**

(22) Date de dépôt: **01.12.83**

(51) Int. Cl.³: **A 63 C 5/00**, A 63 C 15/05

(30) Priorité: **03.12.82 FR 8220888**

(71) Demandeur: **Couvert, Serge, Aussois, F-73500 Modane (FR)**

(43) Date de publication de la demande: **13.06.84 Bulletin 84/24**

(72) Inventeur: **Couvert, Serge, Aussois, F-73500 Modane (FR)**

(84) Etats contractants désignés: **AT CH DE IT LI SE**

(74) Mandataire: **de Beaumont, Michel, Cabinet Poncet 7, chemin de Tillier, F-74000 Annecy (FR)**

(54) **Planche à voile pour neige et glace.**

(57) Le dispositif comprend un socle (1) en forme de ski sur lequel s'articule un gréement (2) de planche à voile. Le socle, d'une longueur voisine de deux cent quarante centimètres et d'une largeur voisine de trente-cinq centimètres, est spatulé et cambré. Il comprend sur sa face inférieure (7) une nervure longitudinale médiane (9) plate aux extrémités et anguleuse vers le milieu du socle sur une longueur de soixante-dix centimètres environ. La partie anguleuse de la nervure est renforcée par une carre métallique.

PLANCHE A VOILE POUR NEIGE ET GLACE

La présente invention concerne les dispositifs à voile permettant l'évolution sur neige et glace, et notamment les dispositifs comprenant un socle muni de moyens assurant un contact glissant avec la neige ou la glace, et sur lequel s'articule un gréement de planche à voile.

On connaît de tels dispositifs dans lesquels le socle comprend un élément plan sur lequel reposer les pieds de l'utilisateur, et sous lequel sont rapportés trois ou quatre patins à glace, éventuellement articulés comme les roues d'une planche à roulettes pour permettre les changements de direction. Ces dispositifs sont particulièrement adaptés pour l'utilisation sur des lacs gelés, les trois ou quatre patins disposés comme les roues d'une voiture assurant une bonne stabilité.

Toutefois, ces dispositifs ne sont pas adaptés à une utilisation sur une neige poudreuse ou relativement molle, par le fait que les patins s'enfoncent dans la neige et provoquent un freinage exagéré. En outre, ces dispositifs ne sont pas adaptés à une utilisation sur des pentes même légères.

La présente invention vise notamment à remédier aux inconvénients des dispositifs connus en proposant un type de socle permettant une utilisation sur neige ou sur glace.

Un autre objet de l'invention est de proposer un dispositif dont la maniabilité soit suffisante pour effectuer des virages en utilisant pratiquement les mêmes techniques qu'avec les planches à voile utilisées sur l'eau.

Un autre objet de l'invention est de proposer un tel dispositif qui présente une bonne glisse ; pour cela un compromis a dû être trouvé entre une largeur minimum, pour un moindre freinage en neige profonde, et suffisante pour garder une bonne stabilité et faciliter les manoeuvre de virement de bord. La réalisation de la dérive, permettant de remonter au vent, demande également un compromis entre un bon accrochage en toute neige, une bonne stabilité en trace directe, et une bonne maniabilité dans les manoeuvres.

Le dispositif de la présente invention présente une bonne stabilité en toute neige, contrairement aux dispositifs connus.

Pour atteindre ces objets ainsi que d'autres, la présente invention prévoit d'utiliser un socle en forme de ski, de longueur comprise entre deux cents et deux cent cinquante centimètres, de largeur comprise entre vingt cinq et quarante centimètres, dont l'extrémité antérieure est relevée pour former spatule ; la face inférieure du socle est glissante et est cambrée longitudinalement pour former une face concave déformable élastiquement sous l'action du poids de l'utilisateur ; sa face supérieure forme surface d'appui pour les pieds.

Selon une autre caractéristique de l'invention, le socle comprend en outre au moins une nervure longitudinale disposée sur sa face inférieure et servant à la fois de dérive et d'élément raidisseur.

Selon une réalisation préférée, particulièrement adaptée à une utilisation en toute neige, le socle comprend une nervure centrale unique s'étendant sensiblement sur toute la longueur du socle, et dont la section est anguleuse dans la zone centrale du socle et s'arrondit et s'aplatit progressivement jusqu'à être plate aux deux extrémités. Ainsi l'accrochage dans le sens transversal est favorisé dans la zone centrale, tandis que les zones d'extrémités arrondies complètent l'accrochage lors d'une utilisation en neige molle mais permettent les changements de direction par pivotement. En outre, la nervure centrale unique permet l'oscillation du socle selon un axe longitudinal médian, ce qui est favorable lors d'une utilisation sur terrain en pente. On améliore ainsi notamment l'accrochage de la partie anguleuse de la nervure.

Selon une autre caractéristique de l'invention, la zone centrale de la nervure comprend deux faces obliques sensiblement perpendiculaire et se rejoignant selon une arête vive comprenant éventuellement une carre métallique. La zone centrale anguleuse a une longueur sensiblement égale à soixante à soixante dix centimètres. Les essais ont montré que ces caractéristiques réalisent un bon compromis entre l'efficacité en dérive et la possibilité de pivotement pour changement de direction.

D'autres caractéristiques et avantages de la présente invention ressortiront de la description suivante de modes de réalisation particuliers, faite en relation avec les figures jointes parmi lesquelles :

- la figure 1 représente une vue en perspective du dispositif de la présente invention ;

- la figure 2 représente une vue de côté du socle ;

- la figure 3 représente une vue de dessous du socle ;

- la figure 4 représente une vue en coupe transversale, à plus grande échelle, selon les axes I-I ou II-II de la figure 3 ;

- la figure 5 représente une vue en coupe transversale selon l'axe III-III de la figure 3 ; et

- la figure 6 représente une vue en coupe transversale selon l'axe IV-IV de la figure 3.

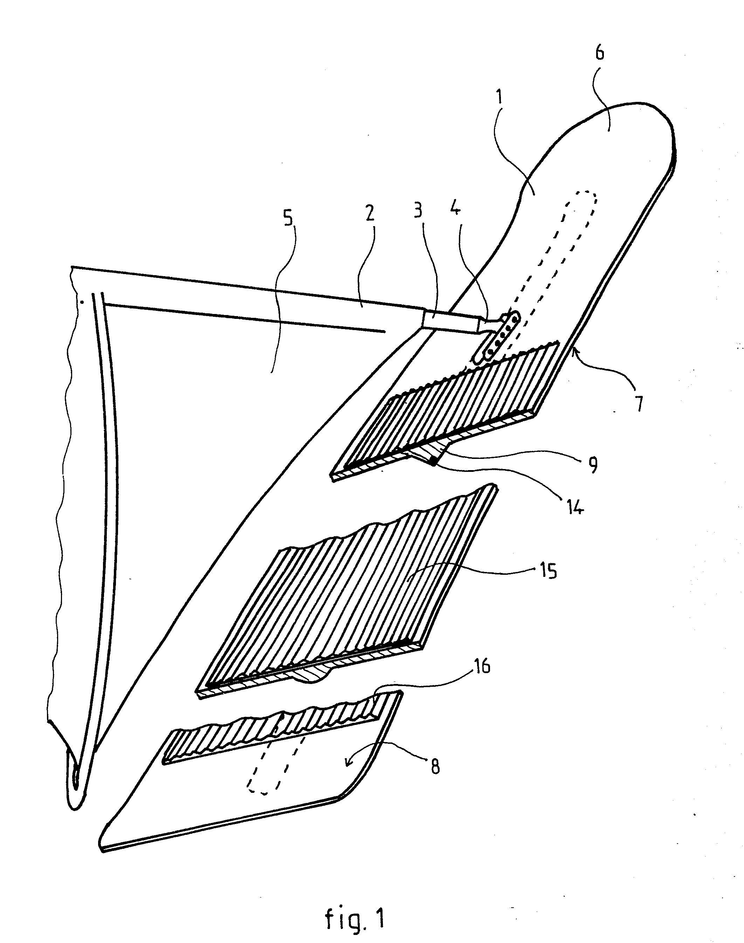

Comme le représente schématiquement la figure 1, le dispositif de la présente invention comprend un socle 1 sur lequel s'articule un gréement de planche à voile 2. Le gréement 2 comprend un mât 3 articulé à sa base 4 et supportant la voile 5.

Le socle 1 est conformé à la manière d'un ski, avec une extrémité antérieure 6 relevée en forme de spatule, et une face inférieure 7 cambrée longitudinalement pour former une surface concave, l'élasticité du socle assurant sa déformation sous l'action du poids de l'utilisateur. On choisira de préférence un socle 1 dont la longueur est comprise entre deux cents et deux cent cinquante centimètres et dont la largeur est comprise entre vingt cinq et quarante centimètres. L'articulation de la base 4 du mât est disposée au voisinage du tiers antérieur du socle 1, comme le représente la figure. La face inférieure 7 du socle est glissante, tandis que la face supérieure 8 est rendue antidérapante, par exemple par adaptation d'un tapis en caoutchouc antidérapant, d'un grillage ou de tout autre dispositif assurant l'adhérence des pieds de l'utilisateur. On pourra également prévoir des cale-pieds.

Dans le mode de réalisation représenté sur les figures, la face inférieure 7 du socle 1 comprend en outre une nervure 9 longitudinale médiane, s'étendant pratiquement sur toute la longueur de la face inférieure 7, et d'une hauteur maximum comprise entre deux et trois centimètres. La section transversale de la nervure 9 présente un profil anguleux dans la zone centrale 10 de la nervure, le profil s'arrondissant et s'aplatissant progressivement au fur et à mesure qu'on s'éloigne de cette zone centrale 10 en direction des extrémités de la nervure.

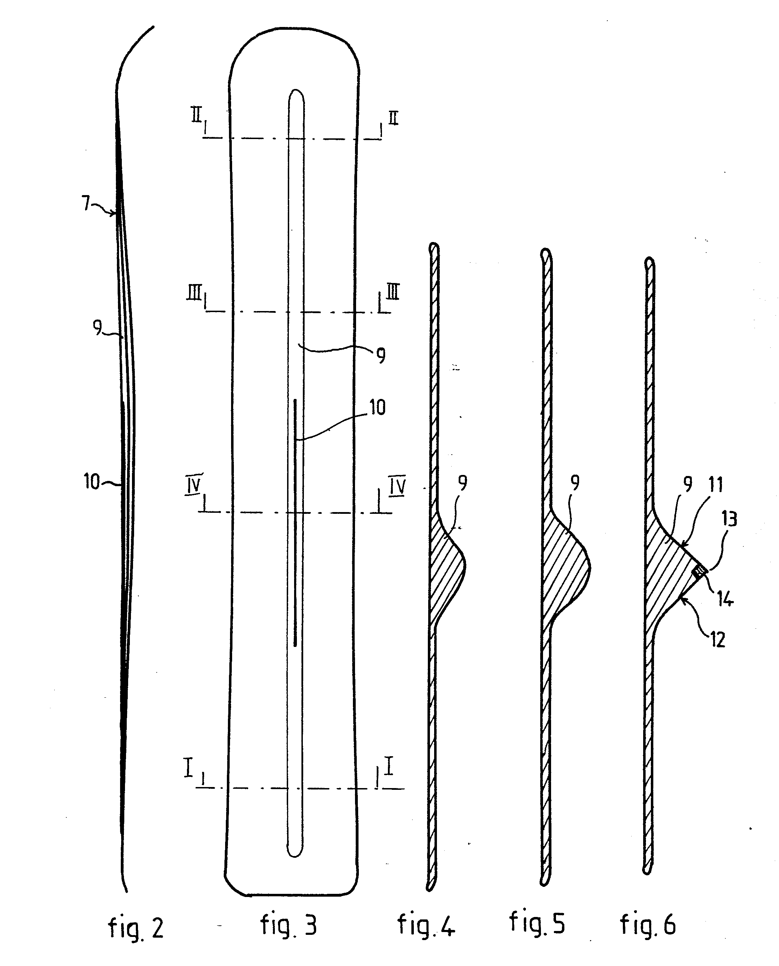

Comme le représente la figure 6, la zone centrale 10 présente une section comportant deux faces obliques 11 et 12 sensi-

0110798

blement perpendiculaires et se rejoignant selon une arête vive 13. L'arête vive 13 sera de préférence renforcée en prévoyant une carre 14 métallique.

La figure 5 représente la coupe transversale du socle selon l'axe III-III de la figure 3, c'est à dire au voisinage du tiers antérieur du socle. Dans cette zone, la nervure 9 est plus arrondie, et de hauteur réduite, comme le représente la figure. Au voisinage des extrémités de la nervure, par exemple selon les coupes II-II et I-I, comme le représente la figure 4, la nervure 9 est encore plus réduite.

La zone centrale anguleuse 10 de la nervure a de préférence une longueur sensiblement égale à soixante à soixante dix centimètres, et son centre est légèrement déporté vers la partie postérieure du socle, comme le représentent les figures.

La forme particulière du socle, et les carres métalliques permettent d'avoir une dérive très accrocheuse dans toutes sortes de neige et glace, tout en gardant une bonne maniabilité du dispositif. En outre, la nervure présente sur neige dure une surface longue et étroite, donnant une meilleure glisse et une très bonne stabilité, tandis que s'enfonçant dans une neige plus molle, elle permet au ski de présenter toute sa surface portante, et, la spatule et la souplesse aidant, de se maintenir à la surface même dans une neige poudreuse.

Plusieurs procédés de fabrication du dispositif peuvent être mis en oeuvre :

- par collage en forme de deux feuilles de contreplaqué de bois de faible épaisseur et d'une semelle plastique entoilée, sur lesquelles on rapporte une nervure en bois façonnée, recouverte d'une semelle plastique flammée et collée en forme à chaud ;

- par les procédés employés dans la fabrication des skis : injection de mousse de synthèse entre des feuilles métalliques ou de bois ou de stratifié de polyester ;

- par moulage en forme d'une feuille de plastique, la nervure assurant une rigidité suffisante ;

- par moulage ou emboutissage d'une feuille d'aluminium recouverte d'une semelle plastique ;

- par moulage en stratifié de polyester et fibres de verre.

Pour les utilisations sur terrain plat tel que les lacs gelés, et notamment sur glace, on pourra prévoir un socle muni de plusieurs nervures, par exemple deux nervures latérales longitudinales de même forme que celles décrites précédemment.

La face supérieure 8 du socle doit présenter un bon coefficient d'adhérence sans retenir la neige. Des essais multiples ont montré que des résultats excellents sont obtenus en adaptant sur cette face supérieure un tapis 15 en caoutchouc souple et lisse présentant des nervures longitudinales 16 à profil en V. La souplesse du caoutchouc favorise, par déformation, l'évacuation de la neige.

La présente invention n'est pas limitée aux modes de réalisation qui ont été explicitement décrits, mais elle en inclut les diverses variantes et généralisations contenues dans le domaine des revendications ci-après.

0110798

REVENDICATIONS

1 - Dispositif à voile permettant l'évolution sur neige et glace, comprenant un socle (1) ayant la forme générale d'un ski avec l'extrémité antérieure relevée pour former spatule, assurant un contact glissant avec la neige ou la glace et sur lequel s'articule un gréement (2) de planche à voile, caractérisé en ce que la face supérieure du socle (1) forme surface d'appui pour les pieds de l'utilisateur, en ce que la longueur du socle est comprise entre deux cents et deux cent cinquante centimètres et sa largeur comprise entre vingt cinq et quarante centimètres, et en ce que la face inférieure (7) glissante du socle est cambrée longitudinalement pour former une face concave déformable élastiquement sous l'action du poids de l'utilisateur.

2 - Dispositif selon la revendication 1, caractérisé en ce que le socle (1) comprend en outre au moins une nervure (9) longitudinale disposée sur sa face inférieure (7) et servant de dérive et d'élément raidisseur.

3 - Dispositif selon la revendication 2, caractérisé en ce que le socle (1) comprend une nervure centrale unique (9) s'étendant sensiblement sur toute la longueur du socle, et dont la section est anguleuse dans la zone centrale (10) du socle et s'arrondit et s'aplatit progressivement jusqu'à être plate aux deux extrémités.

4 - Dispositif selon la revendication 3, caractérisé en ce que la zone centrale (10) de la nervure comprend deux faces obliques (11, 12) sensiblement perpendiculaires se rejoignant selon une arête vive (13).

5 - Dispositif selon l'une des revendications 3 ou 4, caractérisé en ce que l'arête vive (13) est définie par une carre métallique (14).

6 - Dispositif selon l'une quelconque des revendications 3 à 5, caractérisé en ce que la zone centrale anguleuse (10) a une longueur sensiblement égale à soixante à soixante dix centimètres.

7 - Dispositif selon la revendication 6, caractérisé en ce que la zone centrale anguleuse (10) de la nervure a une hauteur comprise entre deux et trois centimètres.

8 - Dispositif selon l'une des revendications 6 ou 7, caractérisé en ce que la zone anguleuse (10) de la nervure est légèrement déportée vers la partie postérieure du socle, et en ce que le mât de gréement (3) de planche à voile s'articule sur le socle au voisinage du tiers antérieur du socle.

9 - Dispositif selon l'une quelconque des revendications 1 à 8, caractérisé en ce qu'un tapis (15) en caoutchouc souple et lisse, présentant des nervures longitudinales (16) à profil en V, est fixé sur la face supérieure (8) du socle.

fig. 1

fig. 2    fig. 3    fig. 4    fig. 5    fig. 6